(19) Europäisches Patentamt
European Patent Office
Office européen des brevets

(11) EP 4 160 775 B1

(12) **EUROPEAN PATENT SPECIFICATION**

(45) Date of publication and mention of the grant of the patent:
**21.08.2024 Bulletin 2024/34**

(21) Application number: **22198438.8**

(22) Date of filing: **28.09.2022**

(51) International Patent Classification (IPC):
***H01M 10/0567*** *(2010.01)* ***H01M 10/0525*** *(2010.01)*
***H01M 4/525*** *(2010.01)* ***C07F 7/08*** *(2006.01)*
*H01M 10/0568 (2010.01)* *H01M 10/0569 (2010.01)*
*C07F 5/02 (2006.01)* *C07F 9/09 (2006.01)*
*C07F 9/113 (2006.01)* *C07F 9/141 (2006.01)*
*C07F 9/143 (2006.01)*

(52) Cooperative Patent Classification (CPC):
**H01M 10/0567; C07F 7/0807; H01M 4/525; H01M 10/0525;** C07F 5/022; C07F 9/095; C07F 9/113; C07F 9/1415; C07F 9/143; H01M 10/0568; H01M 10/0569; H01M 2300/0025; Y02E 60/10

# (54) ELECTROLYTE AND LITHIUM-ION BATTERY USING THE SAME

ELEKTROLYT UND LITHIUM-IONEN-BATTERIE DENSELBEN VERWENDEND

ÉLECTROLYTE ET BATTERIE AU LITHIUM-ION L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2021 CN 202111155842**

(43) Date of publication of application:
**05.04.2023 Bulletin 2023/14**

(73) Proprietor: **Zhuhai Smoothway Electronic Materials Co., Ltd.**
**Zhuhai City, Guangdong Province (CN)**

(72) Inventors:
- **OU, Shuanghui**
  **Zhuhai City, Guangdong Province (CN)**
- **WANG, Pipi**
  **Zhuhai City, Guangdong Province (CN)**
- **BAI, Jing**
  **Zhuhai City, Guangdong Province (CN)**
- **MAO, Chong**
  **Zhuhai City, Guangdong Province (CN)**
- **HUANG, Qiujie**
  **Zhuhai City, Guangdong Province (CN)**
- **DAI, Xiaobing**
  **Zhuhai City, Guangdong Province (CN)**

(74) Representative: **Meyer, Thorsten**
**Meyer Patentanwaltskanzlei**
**Pfarrer-Schultes-Weg 14**
**89077 Ulm (DE)**

(56) References cited:
**CN-A- 112 072 180** **CN-A- 113 764 737**
**KR-A- 20190 132 757**

- **C. WANG ET AL: "Lithio Siloles: Facile Synthesis and Applications", JOURNAL OF THE AMERICAN CHEMICAL SOCIETY, vol. 129, no. 11, 1 March 2007 (2007-03-01), pages 3094 - 3095, XP093022186, ISSN: 0002-7863, DOI: 10.1021/ja070404s**
- **H. LEE ET AL: "Structure and optical properties of new spirobisilole: 2,3,3',4,4',5-hexaphenyl-1,1'-spirobisilole", INORGANIC CHEMISTRY COMMUNICATIONS, vol. 10, no. 6, 27 March 2007 (2007-03-27), pages 731 - 734, XP022071892, ISSN: 1387-7003, DOI: 10.1016/J.INOCHE.2007.03.010**
- **A. LAPORTERIE ET AL: "Synthese du dimethyl-1,1-silole", JOURNAL OF ORGANOMETALLIC CHEMISTRY, vol. 216, no. 3, 25 August 1981 (1981-08-25), pages 321 - 329, XP007911645, ISSN: 0022-328X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- R.A. BENKESER ET AL: "THE FIRST EXAMPLE OF AN AROMATIC SILICON SYSTEM", JOURNAL OF THE AMERICAN CHEMICAL SOCIETY, vol. 83, no. 24, 1 December 1961 (1961-12-01), pages 5029 - 5029, XP093022156, ISSN: 0002-7863, DOI: 10.1021/ja01485a035
- R.A. BENKESER ET AL: "A NEW CLASS OF ORGANOSILICON COMPOUNDS. SILICON ANALOGS OF CYCLOPENTADIENE", JOURNAL OF THE AMERICAN CHEMICAL SOCIETY, vol. 83, no. 17, 1 September 1961 (1961-09-01), pages 3716 - 3716, XP093022154, ISSN: 0002-7863, DOI: 10.1021/ja01478a036

## Description

FIELD OF THE INVENTION

The invention relates to the technical field of lithium ion batteries, in particular to an additive, an electrolyte containing the additive, and a lithium ion battery.

BACKGROUND OF THE INVENTION

Lithium ion batteries are the most successful chemical energy storage batteries due to their high voltage, high energy density and excellent cycle performance. Especially in recent years, the rapid development of the electric vehicle industry has brought lithium ion batteries into a rapid development stage, and the production capacity of the lithium ion batteries is expanded increasingly. Compared with traditional chemical energy storage batteries, lithium ion batteries have obvious advantages in energy density and cycle life, but the temperature adaptability is still to be improved. At present, high-voltage ternary materials face the problems of poor high-temperature storage performance and serious circulation gas. That's possibly because the newly developed coating or doping technology is far from perfect, on one hand; and there is match problem on electrolytes, on the other hand. The conventional electrolyte will be easily oxidized and decomposed on the surface of the positive electrode of the battery under a high voltage of 4.4V, especially such an oxidative decomposition of the electrolyte will be accelerated under high temperature conditions, which causes the deterioration reaction of the positive electrode material.

Chinese patent application CN107112589A discloses a combined electrolyte containing tetravinylsilane (TVS) which can improve the high temperature cycle performance and high temperature storage performance of lithium ion batteries, but has high DCR growth, therefore it is difficult to promote in the market.

Japanese patent JP4419309B2 discloses an electrolyte containing thiophene, which can improve the cycle performance of lithium ion batteries due to the existence of thiophene, but thiophene has poor storage performance and large self-discharge, therefore it is also difficult to promote in the market.

Korean application KR20190132757A disclosures a negative electrode active material using silole derivative to reduce structure stress. Chinese patent application CN112072180A discloses an electrolyte using silicon-oxygen cyclic compound. However, high temperature storage performance and high temperature cycle performance under a high voltage of 4.4V for example, are not desirable.

Therefore, it is necessary to develop an additive to avoid the oxidative decomposition of the electrolyte on the surface of the positive electrode of the battery under a high voltage.

SUMMARY OF THE INVENTION

An objective of the present invention is to provide an electrolyte of a lithium ion battery including an additive, which reduces the surface activity of the positive electrode and inhibits the oxidative decomposition of the electrolyte, thereby improving the high temperature storage performance and high temperature cycle performance of the ternary lithium ion battery under a high voltage of 4.4V.

Another objective of the present invention is to provide a lithium ion battery using the above additive.

To achieve the above objectives, as a first aspect of the present invention, an electrolyte of a lithium ion battery, includes a lithium salt, a non-aqueous organic solvent and a compound represented by Formula I or Formula II:

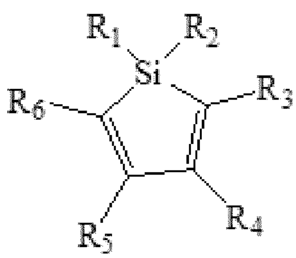

Formula I

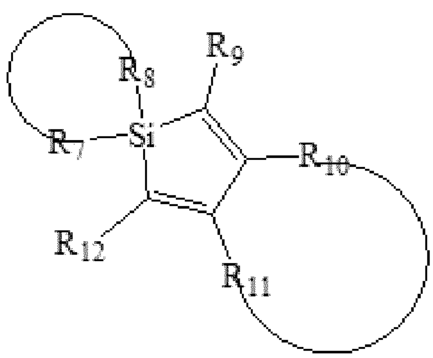

Formula II

wherein, in Formula I, $R_1$-$R_6$ are each independently selected from hydrogen atom, halogen atom, trialkylsilyl, an unsubstituted C1-C12 alkylene group, an unsubstituted C2 -C12 alkenylene group, and an unsubstituted C6-C26 arylene group; in Formula II, $R_9$ and $R_{12}$ are each independently selected from hydrogen atom, halogen atom, trialkylsilyl, an unsubstituted C1-C12 alkylene group, an unsubstituted C2 -C12 alkenylene group, and an unsubstituted C6-C26 arylene group, $R_7$-$R_8$ and $R_{10}$-$R_{11}$ are each independently selected from trialkylsilyl, an unsubstituted C1-C12 alkylene group, an unsubstituted C2 -C12 alkenylene group, and an unsubstituted C6-C26 arylene group.

Compared with the prior art, the additive of the present invention is suitable for the electrolyte of lithium ion batteries, cyclic unsaturated double bonds containing silicon of the additive is polymerized at the electrode/electrolyte interface to form a thinner interface film which has lower interface impedance growth and good thermal stability, thereby reducing the surface activity of the positive electrode, inhibiting the oxidative decomposition of the electrolyte, and protecting the positive electrode, so that the high temperature storage performance of the lithium ion battery is significantly improved. Additionally, Si is contained in the cyclic structure, which can form complexes at the electrode/electrolyte interface, thereby further enhancing the toughness of the interface film, and significantly improving the high temperature cycle performance of lithium ion batteries.

As a preferable embodiment, $R_7$-$R_8$ and $R_{10}$-$R_{11}$ are each independently selected from an unsubstituted C1-C6 alkylene group, and an unsubstituted C2-C6 alkenylene group.

As a preferable embodiment, $R_7$-$R_8$ and $R_{10}$-$R_{11}$ are each independently selected from an unsubstituted C1-C6 unsaturated alkylene group.

As a preferable embodiment, $R_7$-$R_8$ and $R_{10}$-$R_{11}$ are each independently selected from an unsubstituted C1-C6 cyclic saturated or unsaturated alkylene group.

As a preferable embodiment, the compound represented by Formula I is selected from at least one of the following compounds:

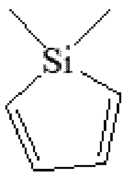

Compound 1 (CAS: 18135-88-1),

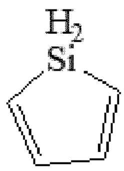

Compound 3 (CAS: 4723-64-2),

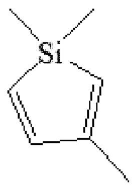

Compound 4 (CAS: 82764-04-3),

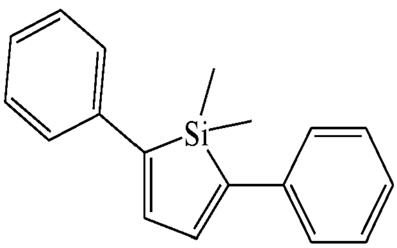

Compound 6 (CAS: 7688-03-1)；

and the compound represented by Formula II is selected from at least one of the following compounds:

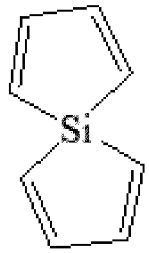

Compound 2 (CAS: 5651-27-4),

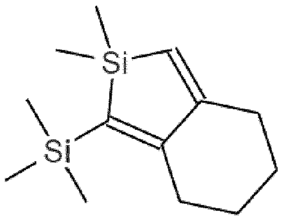

Compound 5 (CAS: 934563-19-6).

Preferably, the Compound 5 is selected, whose structure contains silicon in the cyclic branched chain, to further improve the high temperature cycle performance of the lithium ion battery.

As a preferable embodiment, a weight percentage of the additive in the electrolyte is 0.1% to 5%, such as, but not limited to 0.1%, 0.5%, 1%, 1.5%, 2%, 2.5%, 3%, 3.5%, 4%, 4.5%, or 5%.

As a preferable embodiment, the concentration of the lithium salt is 0.5M-1.5M. The lithium salt is at least one selected from the group consisting of lithium hexafluorophosphate ($LiPF_6$), lithium perchlorate ($LiClO_4$), lithium tetrafluoroborate ($LiBF_4$), lithium methanesulfonate ($LiCH_3SO_3$), lithium trifluoromethanesulfonate ($LiCF_3SO_3$), lithium bistrifluoromethanesulfonimide ($LiN(CF_3SO_2)_2$), lithium dioxalate borate ($C_4BLiO_8$), lithium oxalyldifluoroborate ($C_2BF_2LiO_4$), lithium difluorophosphate ($LiPO_2F_2$), lithium difluorodioxalate phosphate (LiDFBP), lithium bisfluorosulfonimide (LiFSI), and lithium bistrifluoromethanesulfonimide (LiTFSI).

As a preferable embodiment, the non-aqueous organic solvent is at least one selected from the group consisting of chain carbonates, cyclic carbonates, carboxylic acid esters, and ethers.

Preferably, the non-aqueous organic solvent is at least one selected from the group consisting of ethylene carbonate (EC), dimethyl carbonate (DMC), diethyl carbonate (DEC), ethyl methyl carbonate (EMC), propylene carbonate (PC), butyl acetate (n-BA), $\gamma$-butyrolactone (GBL), n-propyl propionate (n-PP), ethyl propionate (EP), and ethyl butyrate (EB).

As a preferable embodiment, the supplemental additive is at least one selected from groups consisting of methyl trifluoroethyl carbonate (MTFEC), ethyl-2, 2, 2-trifluoroethyl carbonate (ETFEC), propyl-2, 2, 2-trifluoroethyl carbonate (PTFEC), vinylene carbonate (VC), fluoroethylene carbonate (FEC), difluoroethylene carbonate (DFEC), diethyl pyrocarbonate (DEPC), 1, 3-propane sultone (PS), dioxathiolane 2,2-dioxide (DTD), 1,2-difluoro-ethylene carbonate (DFEC), tris(trimethylsilyl)-phosphate (TMSP), tris(trimethylsilyl)- phosphite (TMSPi), [4, 4'-Bi-1,3-dioxolane]-2,2'-dione (BDC), 3,3-Bi-1,3,2-Dioxathiolane 2,2-dioxide (BDTD), ethylene 4,4-disulfate, triallyl phosphite (TAP), tripropargyl phosphate (TPP), succinonitrile (SN), adiponitrile (ADN), 1,3,6-hexanetricarbonitrile (HTCN), and ethylene glycol bis(propionitrile) ether (DENE). Due to the supplemental additive, a stable passivation film can be formed on the surface of the positive electrode, the oxidative decomposition of the electrolyte on the surface of the positive electrode is prevented, and the dissolution of transition metal ions from the positive electrode is inhibited, thereby improving the stability of the positive electrode material structure and the interface, and significantly improving the high temperature performance and cycle performance of the battery.

As a second aspect of the present invention, a lithium ion battery includes a positive electrode material, a negative electrode material, and the electrolyte mentioned above, wherein the positive electrode material is a lithium nickel cobalt manganese oxide, and the maximum charging voltage is 4.4V.

As a preferable embodiment, the chemical formula of the lithium nickel cobalt manganese oxide is $LiNi_xCo_yMn_{(1-x-y)}M_zO2$, where $0.6 \leq x < 0.9$, $x+y < 1$, $0 \leq z < 0.08$, and M is at least one of Al, Mg, Zr and Ti.

As a preferable embodiment, the negative electrode material is selected from at least one of artificial graphite, natural graphite, lithium titanate, silicon carbon composite material and silicon oxide.

DETAILED DESCRIPTION OF ILLUSTRATED EMBODIMENTS

The purpose, technical solutions and beneficial effects of the present invention are further described below through specific examples, which is not limited in the present invention however. Examples can be carried out according to the conventional conditions or the conditions suggested by the manufacturer, if no specific conditions are indicated therein. Reagents or instruments in the examples may be the conventional products obtained from the market, if no manufacturer is indicated therein.

[Example 1]

Electrolyte Preparation

All samples were prepared in a nitrogen atmosphere glovebox ($O_2$< 2ppm, $H_2O$<3ppm) by uniformly mixing dimethyl carbonate (EC), ethyl methyl carbonate (EMC) and diethyl carbonate (DEC) in a mass ratio of 1:1:1 to obtain non-aqueous organic solvent, then additive was added. Then the mixed solution was sealed, placed and frozen for 2 hours in a freezing chamber (-4°C). Then, in a nitrogen atmosphere glovebox ($O_2$< 2ppm, $H_2O$<3ppm), lithium salt was slowly added to the mixed solution with stirring until a homogeneous solution and the non-aqueous electrolyte was obtained.

The electrolyte components of Examples 2 to 10 and Comparative Examples 1 to 4 are shown in Table 1, and the steps of preparing electrolyte were the same as those in Example 1.

Table 1

| Examples | Organic solvent / Mass(g) | Lithium salt/ Mass(g) | Additive/Mass(g) | Supplemental additive/ Mass(g) |
|---|---|---|---|---|
| Ex. 1 | EC/EMC/DEC(1:1:1)/ 87 | $LiPF_6$/12.5 | Compound 1/0.5 | / |
| Ex. 2 | EC/EMC/DEC(1:1:1)/ 87 | $LiPF_6$/12.5 | Compound 2/0.5 | / |
| Ex. 3 | EC/EMC/DEC(1:1:1)/ 87 | $LiPF_6$/12.5 | Compound 3/0.5 | / |
| Ex. 4 | EC/EMC/DEC(1:1:1)/ 87 | $LiPF_6$/12.5 | Compound 4/0.5 | / |
| Ex. 5 | EC/EMC/DEC(1:1:1)/ 87 | $LiPF_6$/12.5 | Compound 5/0.5 | / |
| Ex. 6 | EC/EMC/DEC(1:1:1)/ 87 | $LiPF_6$/12.5 | Compound 6/0.5 | / |
| Ex. 7 | EC/EMC/DEC(1:1:1)/ 87 | $LiPF_6$/12.5 | Compound 2/1 | / |
| Ex. 8 | EC/EMC/DEC(1:1:1)/ 87 | $LiPF_6$/12.5 | Compound 2/2 | / |
| Ex. 9 | EC/EMC/DEC(1:1:1)/ 86.5 | $LiPF_6$/12.5 | Compound 1/0.5 | VC/0.5 |
| Ex. 10 | EC/EMC/DEC(1:1:1)/ 86.5 | $LiPF_6$/12.5 | Compound 1/0.5 | FEC /0.5 |
| Com. 1 | EC/EMC/DEC(1:1:1)/ 87.5 | $LiPF_6$/12.5 | / | / |
| Com. 2 | EC/EMC/DEC(1:1:1)/ 87 | $LiPF_6$/12.5 | TVS /0.5 | / |
| Com. 3 | EC/EMC/DEC(1:1:1)/ 87 | $LiPF_6$/12.5 | Thiophene /0.5 | / |

(continued)

| Examples | Organic solvent / Mass(g) | Lithium salt/ Mass(g) | Additive/Mass(g) | Supplemental additive/ Mass(g) |
|---|---|---|---|---|
| Com. 4 | EC/EMC/DEC(1:1:1)/ 87 | $LiPF_6$/12.5 | Thiophene/0.25, TVS /0.25 | / |

Specifically, the formula of the tetravinylsilane (TVS) as the additive is as follows:

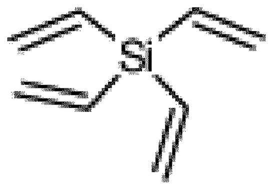

The formula of the thiophene as the additive is as follows:

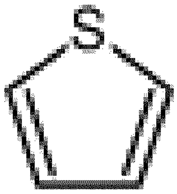

A lithium battery including Zr-doped NCM622 ($LiNi_{0.6}Co_{0.2}Mn_{0.2}O_2$) with the highest charging voltage of 4.4V as the positive electrode material, silicon carbon negative electrode material (10wt.% Si) as the negative electrode material, and respective electrolyte of Examples 1-10 and Comparative Examples 1-4, was respectively prepared according to the following method, and the DCR test, the normal temperature cycle test, the high temperature cycle test and the high temperature storage performance test were carried out separately, and the test results are shown in Table 2.

Lithium Battery Preparation

Preparation of Positive Electrode Plate

Zr-doped NCM622 ($(LiNi_{0.6}Co_{0.2}Mn_{0.2}O_2)_2$), conductive agent SuperP, binder PVDF and carbon nanotube (CNT) were mixed uniformly in a mass ratio of 97:1:1:1 to prepare positive electrode slurry with a certain viscosity, then the slurry was coated on the aluminum foil for the current collector, with the coating amount of $324g/m^2$. After dried at 85°C, the aluminum foil was pressed, trimmed, cut and slit, then dried at 85°C for 4 hours, and then welded for electrode lugs, to finally produce a positive electrode plate of the lithium ion battery that meets the requirements.

Preparation of Negative Electrode Plate

Silicon carbon negative electrode material (10wt.%Si), thickener CMC, and binder SBR (styrene-butadiene rubber emulsion) were mixed in a mass ratio of 95:1.4:1.4:2.2 to obtain a slurry, and the slurry was coated on the copper foil for the current collector, with the coating amount of $168g/m^2$; then the cooper foil was dried at 85°C, trimmed, cut and slit, then dried at 110°C for 4 hours, and then welded for electrode lugs, to finally produce a negative electrode plate for the lithium ion battery that meets the requirements.

Preparation of Lithium Ion Battery

The above positive electrode plates, the negative electrode plates and separators were made into lithium ion batteries with a thickness of 4.7mm, a width of 55mm, and a length of 60mm through a lamination process, and the batteries were vacuum-baked at 75°C for 10 hours, and injected with the non-aqueous electrolytes of Example 1-10 and Comparative Examples 1-4, separately.

DCR Test

The lithium ion batteries were placed in a room (25°C), charged and discharged once at a constant current of 0.5C/0.5C (discharge capacity is recorded as $C_0$), with the upper limit voltage of 4.4V, then charged to 4.4V at a constant current and constant voltage of 0.5C; and then discharged to the remaining capacity of 50%$C_0$, recording a shelving termination voltage $V_0$ after 30 minutes. Then the batteries were discharged with a current of 1C, with a discharge time of 30 seconds, recording a discharge termination voltage $V_1$. The low temperature discharge rate of the lithium ion battery was calculated by the following formulas.

$$DCR=(V_0-V_1)/(1C-0)*1000 \quad \text{(Unit: mohm)}$$

Normal Temperature Cycle Performance Test

The lithium ion batteries were placed in a room (25°C), charged and discharged once at a constant current of 1.0C/1.0C (discharge capacity is recorded as $C_0$), with the upper limit voltage of 4.4V, and then charged and discharged at a constant current of 1.0C/1.0C for 500 cycles (discharge capacity is recorded as $C_1$) under normal temperature. The capacity retention rate of the lithium ion battery was calculated by the following formulas.

$$\text{Capacity retention rate (\%)} = (C_1/C_0) \times 100\%$$

High Temperature Cycle Performance Test

The lithium ion batteries were placed in a high temperature (45°C), charged and discharged once at a constant current of 1.0C/1.0C (discharge capacity is recorded as $C_0$), with the upper limit voltage of 4.4V, and then charged and discharged at a constant current of 1.0C/1.0C for 500 cycles (discharge capacity is recorded as $C_1$) under normal temperature. The capacity retention rate of the lithium ion battery was calculated by the following formulas.

$$\text{Capacity retention rate (\%)} = (C_1/C_0) \times 100\%$$

High Temperature Storage Test

The lithium ion batteries were placed in normal temperature (25°C), charged and discharged once at a constant current of 0.3C/0.3C (discharge capacity was recorded as $C_0$), and the upper limit voltage of 4.4V; then placed in an oven (60°C) for 15 days, and placed in normal temperature (25°C) again for discharging at a constant current of 0.3C, with the discharge capacity was recorded as $C_1$; and then charged and discharged once at a constant current of 0.3C/0.3C (discharge capacity was recorded as $C_2$). A capacity retention rate of the lithium ion battery and a capacity recovery rate were calculated by the following formulas.

$$\text{Capacity retention rate (\%)}=(C_1/C_0)*100\%$$

$$\text{Capacity recovery rate (\%)}=(C_2/C_0)*100\%$$

Table 2

| Examples | 50%SOC | Normal temperature after 500 cycles | High temperature after 300 cycles | High temperature storage 60°C 15 days | |
|---|---|---|---|---|---|
| | DCR (mohm) | Capacity retention rate | Capacity retention rate | Capacity retention rate | Capacity recovery rate |
| Ex. 1 | 105.2 | 85.37% | 70.23% | 83.25% | 85.83% |
| Ex. 2 | 102.3 | 82.44% | 72.62% | 84.22% | 86.25% |
| Ex. 3 | 105.7 | 86.53% | 75.29% | 82.17% | 84.53% |
| Ex. 4 | 106.4 | 83.56% | 77.34% | 84.24% | 86.55% |
| Ex. 5 | 107.6 | 83.22% | 77.03% | 85.83% | 87.93% |
| Ex. 6 | 113.5 | 82.32% | 75.65% | 82.95% | 84.88% |
| Ex. 7 | 104.4 | 86.89% | 77.53% | 84.44% | 86.65% |
| Ex. 8 | 108.3 | 84.58% | 76.79% | 83.37% | 85.02% |
| Ex. 9 | 112.3 | 88.76% | 80.38% | 85.92% | 86.98% |
| Ex. 10 | 103.5 | 87.25% | 82.57% | 86.77% | 88.36% |
| Com. 1 | 98.3 | 75.12% | 61.77% | 55.37% | 60.23% |
| Com. 2 | 129.3 | 80.38% | 69.45% | 67.24% | 70.33% |
| Com. 3 | 100.2 | 77.63% | 66.52% | 12.53% | 55.68% |
| Com. 4 | 115.3 | 78.37% | 67.77% | 34.43% | 58.28% |

As seen from the results in Table 2, compared with Comparative Examples 1 to 4, the batteries in Examples 1 to 10 have lower DCR growth and significantly improved high temperature cycling and high temperature storage characteristics. Due to the use of the additive of the present invention, the cyclic unsaturated double bond containing silicon of the additive is polymerized at the electrode/electrolyte interface to form a thinner interface film which has lower interface impedance growth and good thermal stability, thereby reducing the surface activity of the positive electrode, inhibiting the oxidative decomposition of the electrolyte, and protecting the positive electrode, so that the high temperature storage performance of the lithium ion battery is significantly improved accordingly. Additionally, Si is contained in the cyclic structure, which can form complexes at the electrode/electrolyte interface, thereby further enhancing the toughness of the interface film, and significantly improving the high temperature cycle performance of the batteries.

Moreover, as seen in Examples 9-10, the introduction of the supplemental additive on the basis of additives leads to better high temperature cycle performance and high temperature storage performance.

As seen in Comparative Example 2, tetravinylsilane (TVS) was used as an additive, which just improves the high temperature cycle performance and high temperature storage performance in a certain extent, although Si is contained therein.

As seen in Comparative Example 3, thiophene was used as an additive, which leads to a poor high temperature storage performance due to a large self-discharge.

As seen in Comparative Example 4, thiophene and TVS were combined as additives, which still have weaker high-temperature cycle performance and high-temperature storage performance than those in the present invention which uses compounds of Formula I or Formula II as mentioned above.

## Claims

1. An electrolyte comprising a lithium salt, a non-aqueous organic solvent, and an additive, and the additive comprising a compound represented by Formula I or Formula II:

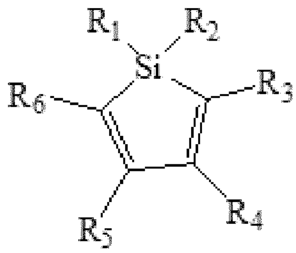

Formula I

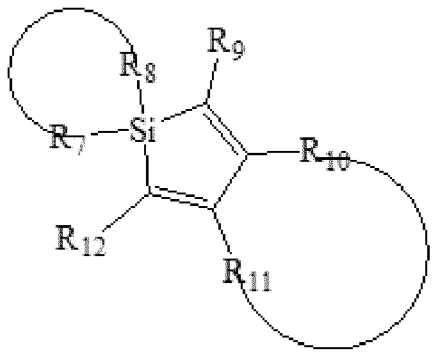

Formula II

wherein, in Formula I, $R_1$-$R_6$ are each independently selected from hydrogen atom, halogen atom, trialkylsilyl, an unsubstituted C1-C12 alkylene group, an unsubstituted C2 -C12 alkenylene group, and an unsubstituted C6-C26 arylene group;

in Formula II, $R_9$ and $R_{12}$ are each independently selected from hydrogen atom, halogen atom, trialkylsilyl, an unsubstituted C1-C12 alkylene group, an unsubstituted C2 -C12 alkenylene group, and an unsubstituted C6-C26 arylene group, $R_7$-$R_8$ and $R_{10}$-$R_{11}$ are each independently selected from trialkylsilyl, an unsubstituted C1-C12 alkylene group, an unsubstituted C2-C12 alkenylene group, and an unsubstituted C6-C26 arylene group.

**2.** The electrolyte according to claim 1, wherein $R_7$-$R_8$ and $R_{10}$-$R_{11}$ are each independently selected from an unsubstituted C1-C6 alkylene group, and an unsubstituted C2-C6 alkenylene group.

**3.** The electrolyte according to claim 1, wherein the compound represented by Formula I is selected from at least one of the following compounds:

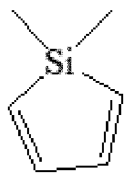

,

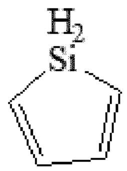

,

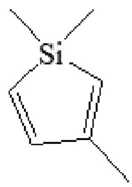

,

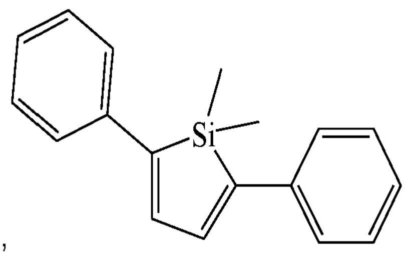

;

and the compound represented by Formula II is selected from at least one of the following compounds:

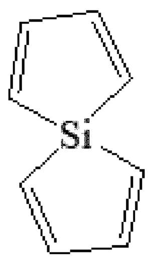

,

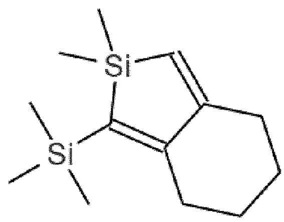

.

**4.** The electrolyte according to claim 1, wherein a weight percentage of the additive in the electrolyte is 0.1% to 5%.

**5.** The electrolyte according to claim 1, wherein the lithium salt is at least one selected from the group consisting of lithium hexafluorophosphate, lithium perchlorate, lithium tetrafluoroborate, lithium methanesulfonate, lithium trifluoromethanesulfonate, lithium bistrifluoromethanesulfonimide, lithium dioxalate borate, lithium oxalyldifluoroborate, lithium difluorophosphate, lithium difluorodioxalate phosphate, lithium bisfluorosulfonimide, and lithium bistrifluoromethanesulfonimide.

6. The electrolyte according to claim 1, wherein the non-aqueous organic solvent is at least one selected from the group consisting of chain carbonates, cyclic carbonates, carboxylic acid esters, and ethers.

7. The electrolyte according to claim 1, further comprising a supplemental additive being at least one selected from the group consisting of methyl trifluoroethyl carbonate, ethyl-2,2,2-trifluoroethyl carbonate, propyl-2,2,2-trifluoroethyl carbonate, vinylene carbonate, fluoroethylene carbonate, difluoroethylene carbonate, diethyl pyrocarbonate, 1,3-propane sultone, dioxathiolane 2,2-dioxide (DTD), 1,2-difluoro-ethylene carbonate, tris(trimethylsilyl)-phosphate, tris(trimethylsilyl)- phosphite, 4,4'-Bi-1,3-dioxolane]-2,2'-dione (BDC), 3,3-Bi-1,3,2-Dioxathiolane 2,2-dioxide (BDTD), ethylene 4,4-disulfate, triallyl phosphite, tripropargyl phosphate, succinonitrile, adiponitrile, 1,3,6-hexanetricarbonitrile, and ethylene glycol bis(propionitrile) ether.

8. A lithium ion battery comprising a positive electrode material, a negative electrode material, and the electrolyte according to claim 1, wherein the positive electrode material is a lithium nickel cobalt manganese oxide.

9. The lithium ion battery according to claim 8, wherein a chemical formula of the lithium nickel cobalt manganese oxide is $LiNi_xCo_yMn_{(1-x-y)}M_zO2$, where $0.6 \leq x < 0.9$, $x+y<1$, $0 \leq z < 0.08$, and M is at least one of Al, Mg, Zr and Ti.

**Patentansprüche**

1. Elektrolyt, umfassend ein Lithiumsalz, ein nichtwässriges organisches Lösungsmittel und ein Additiv, und das Additiv eine Verbindung der Formel I oder Formel II umfasst:

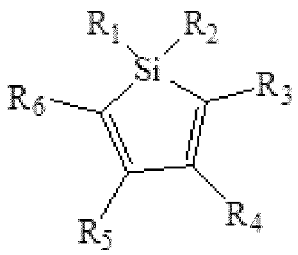

Formel I

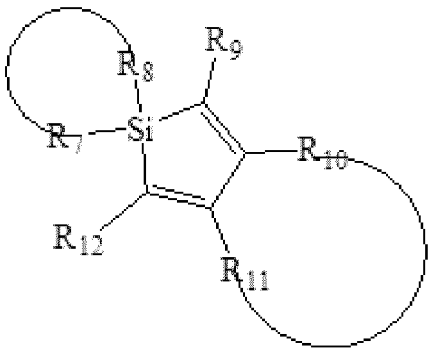

Formel II

wobei in Formel I $R_1$-$R_6$ jeweils unabhängig voneinander ausgewählt sind aus Wasserstoffatom, Halogenatom, Trialkylsilyl, einer unsubstituierten C1-C12-Alkylengruppe, einer unsubstituierten C2-C12-Alkenylengruppe und einer unsubstituierten C6-C26-Arylengruppe;
wobei in der Formel II sind $R_9$ und $R_{12}$ jeweils unabhängig voneinander ausgewählt aus Trialkylsilyl, einem Halogenatom, Trialkylsilyl, einer unsubstituierten C1-C12-Alkylengruppe, einer unsubstituierten C2-C12-Alkenylengruppe und einer unsubstituierten C6-C26-Arylengruppe, R7-R8 und $R_{10}$-$R_{11}$ sind jeweils unabhängig voneinander ausgewählt aus Trialkylsilyl, einer unsubstituierten C1-C12-Alkylengruppe, einer unsubstituierten C2-C12-Alkenylengruppe und einer unsubstituierten C6-C26-Arylengruppe.

2. Elektrolyt nach Anspruch 1, wobei $R_7$-$R_8$ und $R_{10}$-$R_{11}$ jeweils unabhängig voneinander ausgewählt sind aus einer unsubstituierten C1-C6-Alkylengruppe und einer unsubstituierten C2-C6-Alkenylengruppe.

3. Elektrolyt nach Anspruch 1, wobei die durch Formel I dargestellte Verbindung aus mindestens einer der folgenden Verbindungen ausgewählt ist:

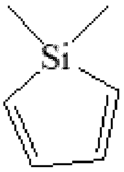 , 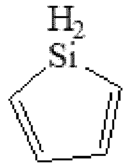 , , 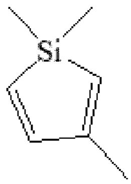 ; 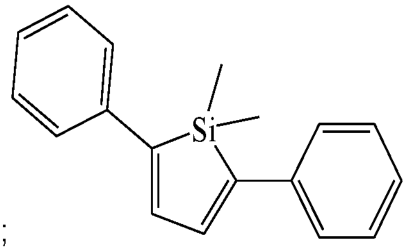

und die durch Formel II repräsentierte Verbindung aus mindestens einer der folgenden Verbindungen ausgewählt wird:

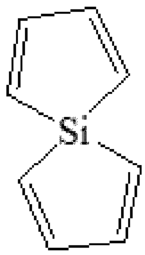 , 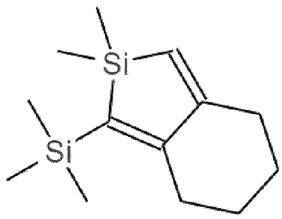 .

4. Elektrolyt nach Anspruch 1, wobei ein Gewichtsprozentsatz des Additivs im Elektrolyten 0,1 bis 5 % beträgt.

5. Elektrolyt nach Anspruch 1, wobei das Lithiumsalz mindestens eines ausgewählt ist aus der Gruppe bestehend aus Lithiumhexafluorphosphat, Lithiumperchlorat, Lithiumtetrafluorborat, Lithiummethansulfonat, Lithiumtrifluormethansulfonat, Lithiumbistrifluormethansulfonimid, Lithiumdioxalatborat, Lithiumoxalyldifluorborat, Lithiumdifluorphosphat, Lithiumdifluordioxalatphosphat, Lithiumbisfluorsulfonimid und Lithiumbistrifluormethansulfonimid.

6. Elektrolyt nach Anspruch 1, wobei das nichtwässrige organische Lösungsmittel mindestens eines aus der Gruppe bestehend aus Kettencarbonaten, cyclischen Carbonaten, Carbonsäureestern und Ethern ist.

7. Elektrolyt nach Anspruch 1, ferner umfassend ein zusätzliches Additiv, das mindestens als eines gewählt ist aus der Gruppe bestehend aus Methyltrifluorethylcarbonat, Ethyl-2,2,2-trifluorethylcarbonat, Propyl-2,2,2-trifluorethylcarbonat, Vinylencarbonat, Fluorethylencarbonat, Difluorethylencarbonat, Diethylpyrocarbonat, 1,3-Propansulton, Dioxathiolan-2,2-dioxid (DTD), 1,2-Difluorethylencarbonat, Tris(trimethylsilyl)-phosphat, Tris(trimethylsilyl)-phosphit, 4,4'-Bi-1,3-dioxolan]-2,2'-dion (BDC), 3,3-Bi-1,3,2-Dioxathiolan 2,2-Dioxid (BDTD), Ethylen-4,4-disulfat, Triallylphosphit, Tripropargylphosphat, Succinanitril, Adiponitril, 1,3,6-Hexantricarbonitril und Ethylenglykol-bis(propionitril)-ether.

8. Lithium-Ionen-Batterie, umfassend ein positives Elektrodenmaterial, ein negatives Elektrodenmaterial und den Elektrolyten nach Anspruch 1, wobei das positive Elektrodenmaterial ein Lithium-Nickel-Kobalt-Mangan-Oxid ist.

9. Lithium-Ionen-Batterie nach Anspruch 8, wobei eine chemische Formel des Lithium-Nickel-Kobalt-Manganoxids $LiNi_xCo_yMn_{(1-x-y)}M_zO2$ ist, wobei $0,6 \leq x < 0,9$, $x+y<1$, $0 \leq z < 0,08$ und M mindestens einer von Al, Mg, Zr und Ti ist.

## Revendications

1. Électrolyte comprenant un sel de lithium, un solvant organique non aqueux et un additif, et l'additif comprenant un composé représenté par la formule I ou la formule II :

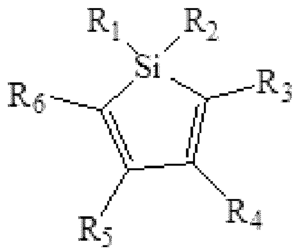

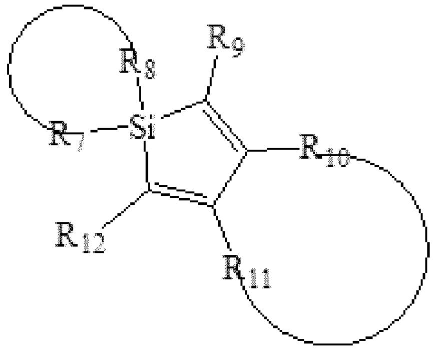

Formule I Formule II

dans laquelle, dans la formule I, les $R_1$-$R_6$ sont chacun choisis indépendamment parmi un atome d'hydrogène, un atome d'halogène, un trialkylsilyle, un groupe alkylène C1-C12 non substitué, un groupe alcénylène C2-C12 non substitué et un groupe arylène C6-C26 non substitué ;

dans la formule II, $R_9$ et $R_{12}$ sont chacun choisis indépendamment parmi l'atome d'hydrogène, l'atome d'halogène, le trialkylsilyle, un groupe alkylène C1-C12 non substitué, un groupe alcénylène C2-C12 non substitué et un groupe arylène C6-C26 non substitué, $R_7$-$R_8$ et $R_{10}$-$R_{11}$ sont chacun choisis indépendamment dans le trialkylsilyle, un groupe alkylène C1-C12 non substitué, un groupe alcénylène C2-C12 non substitué et un groupe arylène C6-C26 non substitué.

2. Électrolyte selon la revendication 1, dans lequel $R_7$-$R_8$ et $R_{10}$-$R_{11}$ sont chacun choisis indépendamment à partir d'un groupe alkylène C1-C6 non substitué, et d'un groupe alcénylène C2-C6 non substitué.

3. Électrolyte selon la revendication 1, dans lequel le composé représenté par la formule I est choisi parmi au moins l'un des composés suivants :

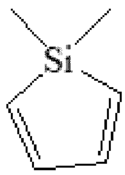 , 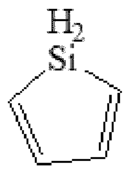 , 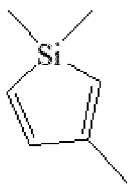 , 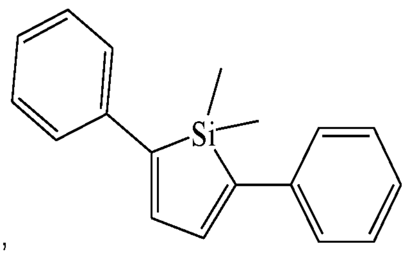 ;

et le composé représenté par la formule II est choisi parmi au moins un des composés suivants :

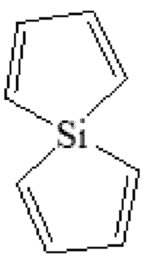 , 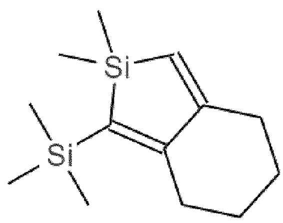 .

4. Électrolyte selon la revendication 1, dans lequel un pourcentage en poids de l'additif dans l'électrolyte est de 0,1 % à 5 %.

5. Électrolyte selon la revendication 1, dans lequel le sel de lithium est au moins un sel choisi dans le groupe constitué de l'hexafluorophosphate de lithium, du perchlorate de lithium, du tétrafluoroborate de lithium, du méthanesulfonate de lithium, du trifluorométhanesulfonate de lithium, du bistrifluorométhanesulfonimide de lithium, du borate de dioxalate de lithium, de l'oxalyldifluoroborate de lithium, du difluorophosphate de lithium, du phosphate de difluorodioxalate de lithium, du bisfluorosulfonimide de lithium et du bistrifluorométhanesulfonimide de lithium.

6. Électrolyte selon la revendication 1, dans lequel le solvant organique non aqueux est au moins un solvant choisi dans le groupe constitué par les carbonates en chaîne, de carbonates cycliques, d'esters d'acide carboxylique et d'éthers.

7. Électrolyte selon la revendication 1, comprenant en outre un additif supplémentaire au moins choisi dans le groupe constitué par le carbonate de méthyltrifluoroéthyle, le carbonate d'éthyl-2,2,2-trifluoroéthyle, le carbonate de propyl-2,2,2-trifluoroéthyle, le carbonate de vinylène, le carbonate de fluoroéthylène, le carbonate de difluoroéthylène, le pyrocarbonate de diéthylène, le sultone de 1,3-propane, le dioxathiolane-2,2-dioxyde (DTD), le carbonate de 1,2-difluoro-éthylène, le tris(triméthylsilyl)-phosphate, tris(triméthylsilyl)-phosphite, 4,4'-Bi-1,3-dioxolane]-2,2'-dione (BDC), 3,3-Bi-1,3,2-dioxathiolane 2,2-dioxide (BDTD), éthylène 4,4-disulfate, triallyl phosphite, phosphate de tripropargyle, succinonitrile, adiponitrile, 1,3,6-hexanetricarbonitrile et éther d'éthylène glycol bis(propionitrile).

8. Batterie au lithium-ion comprenant un matériau d'électrode positive, un matériau d'électrode négative et l'électrolyte selon la revendication 1, dans lequel le matériau d'électrode positive est un oxyde de lithium-nickel-cobalt-manganèse.

9. Batterie au lithium-ion selon la revendication 8, dans laquelle une formule chimique de l'oxyde de lithium-nickel-cobalt-manganèse est $LiNi_xCo_yMn_{(1-x-y)}M_zO2$, où $0,6\leq x<0,9$, $x+y<1$, $0\leq z<0,08$ et M est au moins l'un des éléments Al, Mg, Zr et Ti.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107112589 A
- JP 4419309 B
- KR 20190132757 A
- CN 112072180 A